# DEMANDE DE BREVET EUROPEEN

(11) **EP 1 375 951 A1**
(43) Date de publication de la demande: **02.01.2004**
(21) Numéro de dépôt: 03291546.4
(22) Date de dépôt: 24.06.2003
(51) Int. Cl.: F16D 48/06

(54) **Système de pilotage d'un embrayage**

(30) Priorité: 27.06.2002 FR 0207992
(71) Demandeur: Renault s.a.s., 92100 Boulogne Billancourt (FR)
(72) Inventeur: Benier, Jean, 91590 Cerny (FR); Guillouzic, Yannick, 92100 Boulongne Billancourt (FR); Moussi, Kamel, 95530 La Frette/Seine (FR)

(57) **Abrégé**

L'invention concerne un système de pilotage d'un embrayage, comportant un piston émetteur (46) monté coulissant dans un cylindre (36) formé dans un carter (34), dans lequel il est maintenu dans une position de repos par un moyen élastique de rappel (53), ledit piston émetteur (46) définissant dans le cylindre une première chambre (48) et une seconde chambre (50) isolées l'une de l'autre, un liquide d'alimentation (54) qui est injecté dans la première chambre à travers une électrovanne (58), un liquide de gavage qui alimente la seconde chambre (50), un dispositif hydraulique de commande d'embrayage (32) comportant un piston (78) relié hydrauliquement à la seconde chambre (50) du cylindre et susceptible de commander l'ouverture ou la fermeture de l'embrayage (10) selon la pression qui règne dans la seconde chambre, un capteur (86) pour capter la position du piston émetteur (46) et un calculateur (94) commandant l'électrovanne (58) en fonction de l'information reçue du capteur (86) et de lois de pilotage d'ouverture/fermeture de l'embrayage (10).

## Description

L'invention concerne un système de pilotage d'ouverture/fermeture d'un embrayage de véhicule automobile.

La présente invention concerne plus particulièrement un système servant à piloter l'ouverture et la fermeture d'un embrayage de véhicule automobile par l'intermédiaire d'un système électro-hydraulique.

Dans une boite de vitesses manuelle classique, le passage d'un rapport se fait en appuyant sur la pédale d'embrayage pour ouvrir l'embrayage, puis en passant manuellement la vitesse et enfin en relâchant la pression sur la pédale afin de fermer l'embrayage. La pression sur la pédale est transmise au diaphragme de l'embrayage par un système de transmission à câble ou hydraulique.

On connaît également des boites de vitesses robotisées dans lesquelles la fonction d'ouverture/fermeture de l'embrayage est accomplie automatiquement par un module de robotisation. Le véhicule ne comporte plus de pédale d'embrayage, mais seulement une pédale d'accélération et une pédale de freinage.

Dans les boîtes de vitesses robotisées connues, le module de robotisation est de type à fonctionnement électro-hydraulique ou exclusivement électrique. Ce dernier a l'inconvénient de manquer de puissance vis-à-vis des efforts qu'il doit fournir, en raison de la faible quantité d'énergie électrique stockée dans la batterie du véhicule.

De plus, l'utilisation d'un module de robotisation nécessite souvent de concevoir de nouveaux carters d'embrayage et de réaménager le compartiment moteur afin d'y dégager le volume alloué au système de pilotage.

La mise en oeuvre des systèmes de pilotage actuels s'avère être coûteuse, car une solution spécifique doit être trouvée pour chaque application.

La présente invention vise à remédier à ces inconvénients de la technique antérieure et, à cet effet, elle a pour objet un système de pilotage de type électro-hydraulique.

Un autre objet de l'invention est de proposer un système de pilotage d'embrayage ayant une architecture compacte, de manière à pouvoir être facilement logé dans le compartiment moteur, sans que l'on ait à concevoir un carter d'embrayage spécifique. On engendre ainsi de faibles coûts de mise en oeuvre lors d'une adaptation.

L'invention a également pour objet un système de pilotage d'embrayage indépendant du dispositif hydraulique d'ouverture/fermeture d'embrayage.

Un autre objet de l'invention est de proposer un système de pilotage d'embrayage qui peut être adapté sur diverses boîtes de vitesses mécaniques.

Tous ces avantages sont obtenus avec le système de pilotage d'ouverture/ fermeture d'un embrayage de véhicule selon l'invention, caractérisé en ce qu'il comporte :
- un piston émetteur axial qui est monté coulissant, dans un cylindre formé dans un carter, entre une position de repos, dans laquelle il est maintenu par un moyen élastique de rappel, et une position d'actionnement, le piston émetteur délimitant dans le cylindre une première chambre d'alimentation et une seconde chambre de pression isolées l'une de l'autre,
- un liquide d'alimentation qui est injecté dans la première chambre à travers une éiectrovanne de manière à déplacer le piston émetteur vers la position d'actionnement à l'encontre de la force de l'élément élastique de rappel,
- un liquide de gavage qui alimente la seconde chambre,
- un dispositif hydraulique de commande d'embrayage comportant un piston qui est relié hydrauliquement à la seconde chambre du cylindre et qui est susceptible de commander l'ouverture ou la fermeture de l'embrayage selon la pression qui règne dans la seconde chambre,
- un capteur monté dans le cylindre, dont une tige axiale est solidaire du piston émetteur, et dont des moyens de détection de la position axiale de la tige sont destinés à émettre une information représentative du déplacement du piston émetteur axial du dispositif hydraulique de commande de l'embrayage,
- et un calculateur destiné à recevoir l'information de position de la tige émise par le capteur, le calculateur commandant l'ouverture et la fermeture de l'électrovanne en fonction de l'information de position reçue et en fonction de lois de pilotage d'ouverture/ fermeture de l'embrayage.

Le capteur de position est compact et est notamment monté coaxialement dans le carter.

Le piston émetteur et le dispositif hydraulique de commande d'embrayage ont un fonctionnement purement hydraulique. De plus, ce système de pilotage peut être adapté sur toutes les boites de vitesses manuelles existantes équipées d'un dispositif hydraulique de commande d'embrayage.

En raison de son architecture compacte, il ne nécessite pas forcément de réaménagement de l'architecture du compartiment moteur, de sorte que son coût de mise en oeuvre est faible.

On notera que le capteur de position aurait pu être monté sur le dispositif hydraulique de commande d'embrayage lui-même.

Toutefois, cette solution est désavantageuse car en cas de panne ou d'entretien du dispositif hydraulique de commande d'embrayage, il faudrait démonter l'embrayage. L'astuce selon l'invention consiste à monter le capteur dans le carter recevant le piston émetteur de façon à capter la position dudit piston émetteur.

Le système de pilotage selon l'invention est économique, car il permet d'utiliser un dispositif hydraulique de commande d'embrayage conventionnel, qui est un composant bon marché et fiable.

Un mode de réalisation de l'invention sera décrit à présent, à titre d'exemple non limitatif, en regard des dessins annexés dans lesquels :
- la figure 1 est une vue schématique en coupe d'un système de pilotage robotisé selon un mode de réalisation de l'invention et montrant le piston émetteur en position de repos et l'embrayage à l'état fermé ;
- la figure 2 est une vue schématique en coupe du système de pilotage robotisé montrant le piston émetteur dans une position extrême d'actionnement et l'embrayage à l'état ouvert ; et
- la figure 3 est une vue à plus grande échelle du dispositif hydraulique de commande d'embrayage représenté aux figures 1 et 2.

Dans la description qui va suivre, des chiffres de référence identiques désignent des pièces identiques ou ayant des fonctions similaires.

Par convention, les termes "avant" et "arrière", désignent respectivement des éléments ou des positions orientés respectivement vers la gauche et la droite des figures.

Avant de décrire le système de pilotage de l'invention, on rappellera la structure d'un embrayage connu, afin de bien situer l'invention dans son contexte technique. L'embrayage choisi est du type à diaphragme, mais il sera compris que l'invention peut trouver à s'appliquer également à d'autres types d'embrayages connus.

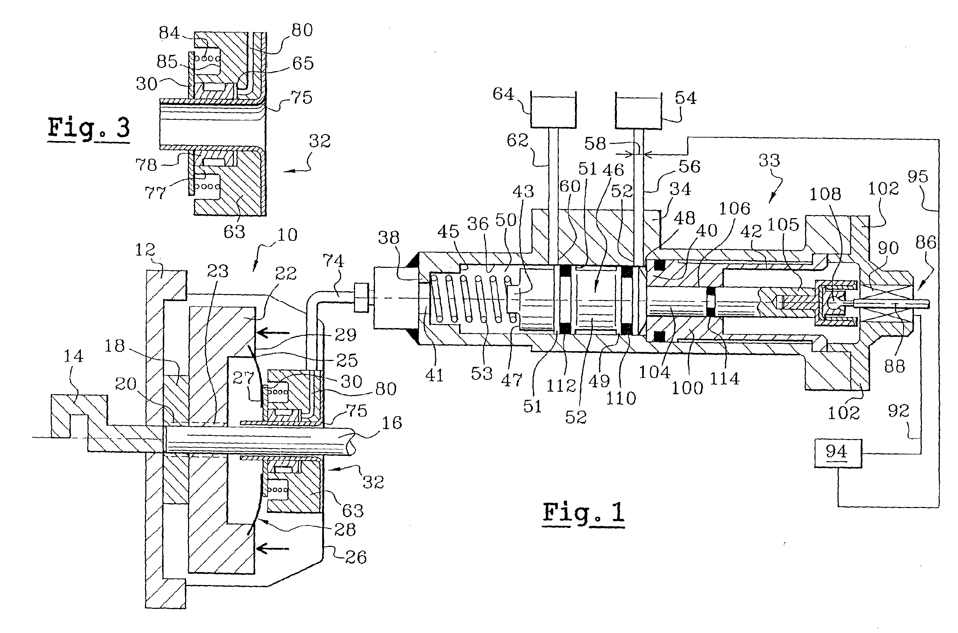

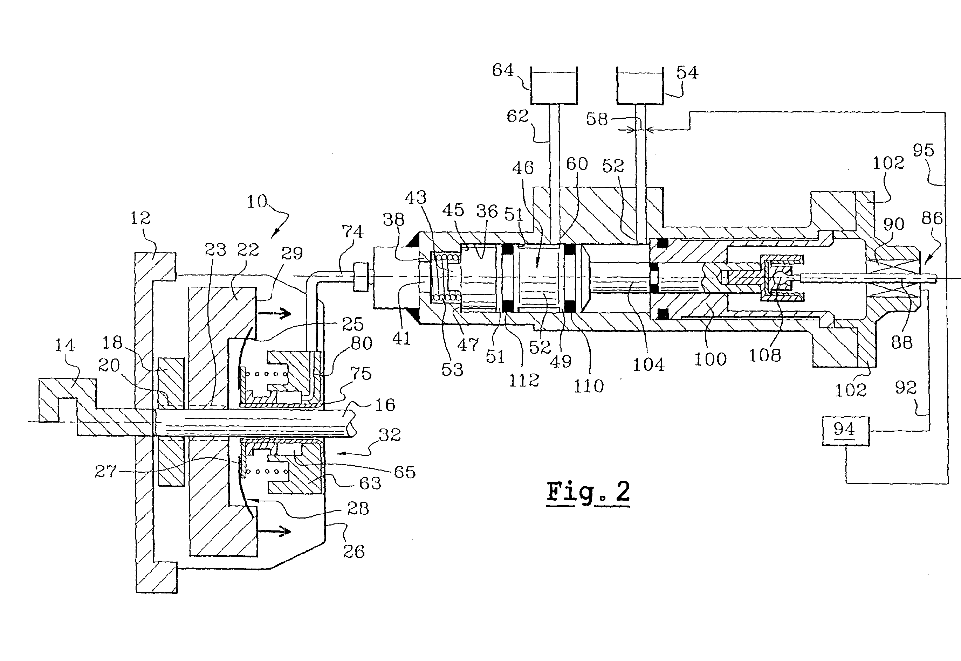

L'embrayage 10 qui a été représenté aux figures 1 et 2 comporte un volant moteur 12 solidaire du vilebrequin 14 du moteur, et qui est donc entraîné en rotation avec lui. Sur l'arbre primaire 16 de la boîte de vitesses (non représentée), est monté coulissant un disque d'embrayage 18 relié à l'arbre primaire par un assemblage à cannelures 20.

L'embrayage 10 comporte également un plateau de pression 22 qui est solidaire en rotation de l'arbre primaire 16, et qui peut coulisser sur l'arbre 16 par l'intermédiaire d'un assemblage à cannelures 23, une cloche d'embrayage 26 fixée sur le volant moteur 12, et un diaphragme élastique 28 en forme de disque tronconique. Le bord 25 de grand diamètre du diaphragme 28 est rigidement fixé sur le plateau de pression 22, au voisinage de son bord périphérique 29, tandis que le bord 27 de petit diamètre du diaphragme 28 est en appui sur une bague mobile 30 appartenant à un dispositif hydraulique de commande 32 que l'on décrira par la suite.

Comme l'illustre la figure 1, lorsqu'il n'est soumis à aucun effort, le diaphragme 28 a une forme naturelle convexe. Il peut être déformé élastiquement pour prendre une forme concave, comme représenté à la figure 2. On comprendra que dans son état convexe, état qu'il prend lorsque la bague 30 est dans la position rétractée représentée à la figure 1, le diaphragme 28 exerce une pression constante sur le bord périphérique 29 du plateau de pression 22 et l'applique donc contre le disque d'embrayage 18, dans le sens des flèches de la figure 1. Le disque d'embrayage 18 est alors pressé contre le volant moteur 12, de sorte que le mouvement du moteur est transmis à l'arbre primaire 16.

Par contre, lorsque la bague 30 est dans la position avancée qui a été représentée à la figure 2, le diaphragme 28 est déformé de manière à prendre une forme concave et, comme l'illustrent les flèches de la figure 2, son bord périphérique 25 exerce une traction sur le plateau de pression 22. Le plateau de pression 22 est alors séparé du disque d'embrayage 18, de sorte que le mouvement de rotation du volant moteur 12 n'est plus transmis à l'arbre primaire 16.

On décrira à présent le système de pilotage robotisé selon l'invention.

Le système de pilotage est désigné dans son ensemble par la référence 33. il comporte un carter 34 dans lequel est réalisé un alésage ou cylindre 36 qui est fermé à son extrémité avant par une paroi de fond 38 et qui est obturé à son extrémité arrière par une paroi transversale 40 d'un boîtier 42 qui sera décrit plus en détail ultérieurement.

La paroi de fond 38 est percée d'un orifice de sortie 41 agencé dans l'axe du cylindre 36.

Dans le cylindre 36 est monté coulissant un piston émetteur 46 axial dont les dimensions sont déterminées par les spécifications de l'embrayage 10 à ouvrir ou à fermer.

Le piston émetteur 46 définit dans le cylindre 36 une première chambre 48 d'alimentation se trouvant du côté de la paroi transversale 40 et une seconde chambre 50 de pression se trouvant du côté de la paroi avant de fond 38. Ces deux chambres 48 et 50 peuvent avoir des sections égales ou différentes. Les chambres 48 et 50 sont isolées l'une de l'autre par l'intermédiaire d'une partie 52 intermédiaire d'isolation du piston 46 qui est délimitée par deux épaulements arrière 49 et avant 51 du piston 46 qui sont de diamètres correspondant respectivement à ceux des première chambre 48 et seconde chambre 50.

Le piston 46 est rappelé élastiquement vers une position de repos contre la paroi transversale 40 par un moyen élastique de rappel constitué par exemple d'un ressort 53 qui est monté dans la deuxième chambre 50 et qui en appui à ses extrémités sur la paroi de fond 38 et sur le piston 46.

La première chambre 48 est reliée, à travers un premier orifice 52, et par l'intermédiaire d'une conduite 56 sur laquelle est disposée une électrovanne 58, à un réservoir 54 de liquide d'alimentation. Le premier orifice 52 est agencé à une extrémité de la première chambre adjacente 48 à la paroi transversale 41 du boîtier 42. De cette manière, le liquide d'alimentation peut être est injecté dans la première chambre 48 manière à déplacer le piston émetteur 46 vers une position d'actionnement dans laquelle il se déplace vers la paroi 38 de fond à l'encontre de la force de rappel du ressort 53.

La seconde chambre 50 de pression est alimentée, à travers un second orifice 60 du carter 34, et par l'intermédiaire d'une conduite 62, à un second réservoir 64 contenant un liquide dit de gavage. En particulier, le second orifice 60 débouche dans la seconde chambre 50 légèrement en avant de l'extrémité avant du piston 46 émetteur, pris dans sa position de repos de la figure 1.

Le piston émetteur comporte un premier joint 110 fixé à son extrémité située du côté de la première chambre 48, pour assurer l'étanchéité entre cette chambre et la partie 52 intermédiaire d'isolation du cylindre agencée entre les première et deuxième chambre 48, 50, un deuxième joint 112 fixé à son extrémité située du côté de la seconde chambre 50 pour assurer l'étanchéité entre la partie intermédiaire 52 d'isolation du cylindre et la seconde chambre 50 Les premier et deuxième joints 110, 112 sont avantageusement réalisés en téflon et ils assurent ainsi une étanchéité parfaite des chambres 48, 50 par rapport à la partie intermédiaire d'isolation 52.

On décrira. à présent le dispositif hydraulique de commande d'embrayage 32 des figures 1 et 2 plus particulièrement en référence à la figure 3.

Dans le mode de réalisation préféré de l'invention, ce dispositif 32 est constitué par un récepteur concentrique hydraulique, plus connu sous le nom de "récepteur CSC".

Le dispositif 32 hydraulique de commande d'embrayage comporte un boîtier cylindrique 63 qui est fixé à l'intérieur de la cloche d'embrayage 26, dans l'axe de l'arbre primaire 16. Le boîtier 63 comporte une chambre annulaire 65 qui est délimitée par un tube 75 traversé par l'arbre primaire 16, et une saillie annulaire 77 du boîtier 63, tous deux coaxiaux avec l'axe du boîtier 63.

Dans cette chambre annulaire 65 est monté coulissant un piston annulaire 78. La seconde chambre 50 du cylindre 36 est reliée à la chambre annulaire 65 du dispositif 32 hydraulique de commande d'embrayage par l'intermédiaire d'une conduite 74 dont une extrémité est reliée à une extrémité à l'orifice 41 de sortie qui traverse la paroi de fond 38 et dont l'autre extrémité est reliée à un canal 80 sensiblement radial qui est percé dans le boîtier 63.

La bague 30, solidaire du diaphragme 28 comme décrit précédemment, est fixée sur l'extrémité avant du piston annulaire 78. Un ressort 84 est interposé entre cette bague 30 et le fond d'une rainure annulaire 85 du boîtier 63 pour rappeler cette bague 30 vers le plateau de pression 22.

De la sorte, une augmentation de la pression du liquide de gavage dans la seconde chambre 50 du cylindre 36 entraîne une augmentation de pression dans la chambre annulaire 65 du dispositif 32 hydraulique de commande d'embrayage et par conséquent le déplacement vers l'avant de la bague 30. Réciproquement, une diminution de la pression du liquide de gavage dans la seconde chambre 50 du cylindre 36 entraîne une diminution de pression dans la chambre annulaire 65 du dispositif 32 hydraulique de commande d'embrayage et par conséquent le déplacement vers l'arrière de la bague 30.

Avantageusement, afin d'éviter une destruction du récepteur 32 formant dispositif hydraulique de commande d'embrayage du fait d'une surpression dans la seconde chambre 50 du cylindre 36, une position extrême d'actionnement du piston émetteur 46 est définie par la mise en butée d'une face avant transversale 47 de celui-ci contre une face avant d'épaulement 45 du cylindre 36. Par exemple, la face transversale 47 est agencée légèrement en arrière d'un pion 43 de réception de l'extrémité du ressort 53, et la position axiale de la face avant d'épaulement 45 du cylindre est prévue pour prévenir l'apparition d'une pression excessive dans le dispositif 32 hydraulique de commande d'embrayage.

Conformément à l'invention, le système 10 comporte un capteur 86 monté dans le cylindre 36 du carter 34, dont une tige axiale 88 est solidaire du piston 46 émetteur, et dont des moyens 90 de détection de la position axiale de la tige sont destinés à émettre une information représentative du déplacement du piston 46 émetteur axial du système 33 de pilotage de l'embrayage.

Plus particulièrement, la capteur 86 est relié par une liaison 92 à un calculateur 94 pour que celui-ci reçoive l'information de position de la tige 88 émise par le capteur 86. Le calculateur 94 est susceptible de commander l'ouverture et la fermeture de l'électrovanne 58, par l'intermédiaire d'une liaison 95 et en fonction de l'information de position reçue et en fonction de lois de pilotage d'ouverture/ fermeture de l'embrayage 10 et/ou de paramètres d'état du système, par exemple en fonction de la détection d'une accélération ou d'un ralentissement du véhicule.

Ainsi, l'information de position de la tige 88 permet de réguler le débit du liquide d'alimentation en provenance du réservoir 54 entrant dans la première chambre 48 du 36.

Le capteur 86 est reçu dans le cylindre 36 du carter 34. Plus particulièrement, le capteur 86 est reçu dans le boîtier 42 qui est monté dans le cylindre 36. Le boîtier 42 comporte par exemple un demi-boîtier avant 100, vissé la partie arrière de l'alésage 36, et un bouchon arrière 102, lui aussi reçu dans l'alésage 36 et en appui contre le demi-boîtier avant 100. Le bouchon arrière 102 reçoit le capteur 86 et le demi-boîtier avant 100 reçoit un moyen d'accouplement du piston 46 avec la tige 88.

Avantageusement, la position de repos du piston émetteur 46 est définie par la mise en butée de celui-ci dans la première chambre 48 contre la paroi transversale 41 du boîtier 42, qui fait plus particulièrement partie du demi-boîtier avant 100.

Le piston émetteur 46 comporte un axe arrière 104 qui s'étend à partir de l'arrière du piston 46 et qui traverse un perçage 106 de la paroi transversale 41 du demi-boîtier avant 100 du boîtier 42. L'extrémité libre 105 de l'axe 104 est accouplée, à l'intérieur du demi-boîtier avant 100, à la tige 88 du capteur, qui est coaxiale aux moyens de détection. L'axe 104 est notamment accouplé à la tige 88 par l'intermédiaire d'un montage à rotule 108.

Un troisième joint 114 porté par l'axe 104 est au contact du perçage 106 de la paroi 41 transversale du boîtier 42 du capteur, pour assurer l'étanchéité entre la première chambre 48 et la paroi transversale 41 du boîtier 42 du capteur. Le troisième joint est réalisé en téflon.

Les moyens 90 de détection comportent un élément inductif, par exemple une bobine, qui est reçu dans le bouchon 102 du boîtier 100 autour de la tige 88 et qui est destiné à coopérer magnétiquement avec un insert métallique (non représenté) logé dans la tige 88 pour provoquer des variations de champ magnétique représentatives de la position de la tige 88. Par exemple, la bobine 90 est parcourue par un courant électrique et les déplacements de l'insert de la tige 88 dans la bobine 90 font varier le champ produit par la bobine 90 et donc le courant qui la parcourt.

On décrira à présent le principe du fonctionnement du système de pilotage. Le fonctionnement se décompose en six phases qui vont être décrites ci-dessous.

Une phase de repos est représentée à la figure 1. Le piston émetteur 46 est maintenu en butée par le ressort de rappel 53 contre la paroi transversale 48. Cette position n'est pas influencée par le type des dispersions d'implantation, le type de dispositif 32 d'embrayage hydraulique et les tolérances dimensionnelles. La position du piston émetteur 46 ou de la tige 88 est repérée par le capteur 86. La pression du liquide de gavage qui emplit le circuit hydraulique de commande constitué de la deuxième chambre 50, de la conduite 74, du canal 80 et de la chambre annulaire 65, est la pression ambiante puisque ces chambres sont reliées au réservoir 62. Il en résulte que le piston annulaire 78 du dispositif 32 hydraulique de commande d'embrayage est dans sa position rétractée. Le diaphragme 28 n'est pas sollicité et prend sa forme normale convexe. Il exerce une pression sur le plateau de pression 22. L'embrayage est alors fermé, comme représenté sur la figure 1.

Dans une phase de course morte, selon les paramètres d'état du système et les conditions de la conduite, le calculateur 94 peut être amené à commander un changement de vitesses. Pour cela, il doit auparavant commander l'ouverture de l'embrayage 10. Le calculateur commande d'abord l'ouverture de l'électrovanne 58. Sous l'action de l'augmentation de la pression d'alimentation dans la première chambre 48, le piston émetteur se déplace vers la gauche sur la figure 1, en repoussant le liquide de gavage.

Tant que le joint avant 112 du piston émetteur n'a pas franchi l'orifice de gavage 60, le circuit hydraulique de commande reste à la pression ambiante.

Dans une phase d'ouverture de l'embrayage, le piston émetteur 46 continuant son mouvement vers la gauche sur la figure 1, dès que la deuxième chambre 50 est séparée de l'orifice 60, la pression dans le circuit hydraulique de commande augmente. Le piston annulaire 78 est alors repoussé vers la gauche sur la figure 1 et le diaphragme 28 prend sa forme concave, ce qui provoque la séparation du plateau de pression 22 du disque d'embrayage 18.

L'embrayage 10 est alors ouvert, comme représenté à la figure 2.

Dans une phase de maintien de l'embrayage ouvert, la pression d'alimentation dans la première chambre 48 permet de maintenir le piston émetteur 46 dans la position de la figure 2 et l'embrayage à l'état ouvert

Dans une phase de fermeture de l'embrayage 10, lorsque le calculateur 94 commande la fermeture de l'électrovanne 58 et donc une diminution de la pression d'alimentation, le piston émetteur 46 est rappelé progressivement vers une position dans laquelle la deuxième chambre 50 communique à nouveau avec l'orifice 60 de gavage. A ce moment, la pression dans le circuit hydraulique de commande s'équilibre à la pression ambiante. Le piston annulaire 78 est rappelé vers la droite sur la figure 2 par le diaphragme qui tend à reprendre sa forme convexe. L'embrayage est alors fermé.

Dans une phase de retour au repos, le ressort 53 maintient le piston émetteur 46 en position de repos tant que la pression d'alimentation ne s'élève pas.

En conclusion, l'invention a permis de réaliser un système 33 de pilotage de l'ouverture / fermeture d'un embrayage 10, par l'intermédiaire d'un dispositif 32 hydraulique de commande d'embrayage de série, adapté notamment aux boîtes de vitesses manuelles, avec un faible coût de mise en oeuvre et en utilisant un module de robotisation d'architecture plus compacte que dans les techniques antérieures.

## Revendications

1. Système (33) de pilotage d'ouverture/fermeture d'un embrayage (10) de véhicule automobile, **caractérisé en ce qu'**il comporte :
- un piston (46) émetteur axial qui est monté coulissant, dans un cylindre (36) formé dans un carter (44), entre une position de repos dans laquelle il est maintenu par un moyen (53) élastique de rappel et une position d'actionnement, le piston émetteur (46) délimitant dans le cylindre (36) une première chambre (48) d'alimentation et une seconde chambre (50) de pression isolées l'une de l'autre,
- un liquide d'alimentation qui est injecté dans la première chambre (48) à travers une électrovanne (58) de manière à déplacer le piston émetteur (46) vers la position d'actionnement à l'encontre de la force de l'élément (53) élastique de rappel,
- un liquide de gavage qui alimente la seconde chambre (50),
- un dispositif (32) hydraulique de commande d'embrayage comportant un piston (78) qui est relié hydrauliquement à la seconde chambre (50) du cylindre et qui est susceptible de commander l'ouverture ou la fermeture de l'embrayage (10) selon la pression qui règne dans la seconde chambre (50),
- un capteur (86) monté dans le cylindre (36), dont une tige (88) axiale est solidaire du piston émetteur (46), et dont des moyens (90) de détection de la position axiale de la tige (88) sont destinés à émettre une information représentative du déplacement du piston émetteur axial du dispositif (32) hydraulique de commande de l'embrayage (10),
- et un calculateur (94) destiné à recevoir l'information de position de la tige (88) émise par le capteur (86), le calculateur (94) commandant l'ouverture et la fermeture de l'électrovanne (58) en fonction de l'information de position reçue et en fonction de lois de pilotage d'ouverture/ fermeture de l'embrayage (10).

2. Système selon la revendication 1, **caractérisé en ce qu'**une position extrême d'actionnement du piston émetteur (46) est définie par la mise en butée d'une face transversale (47) de celui-ci contre une face d'épaulement (45) du cylindre (36) dont la position axiale est prévue pour prévenir l'apparition d'une pression excessive dans le dispositif (32) hydraulique de commande d'embrayage.

3. Système selon l'une des revendications 1 ou 2, **caractérisé en ce que** la position de repos du piston émetteur (46) est définie par la mise en butée de celui-ci dans la première chambre (48) contre une paroi (40) transversale d'un boîtier (42), qui est reçu dans le cylindre (36) du carter (34) et qui reçoit le capteur (86).

4. Système selon la revendication précédente, **caractérisé en ce que** le piston (46) émetteur comporte un axe (104) qui traverse un perçage (106) de la paroi (40) transversale du boîtier (42) et qui est accouplé à l'intérieur du boîtier (42) à la tige (88) du capteur (86), qui est coaxiale aux moyens (90) de détection.

5. Système selon la revendication précédente, **caractérisé en ce que** les moyens (90) de détection comportent un élément inductif qui est reçu dans le boîtier (42) autour de la tige (88) et qui est destiné à coopérer magnétiquement avec un insert métallique logé dans la tige (88) pour provoquer des variations de champ magnétique représentatives de la position de la tige (88).

6. Système selon l'une des revendications précédentes, **caractérisé en ce que** le liquide d'alimentation et le liquide de gavage sont injectés dans le cylindre à travers deux orifices (52, 60) du carter (34), qui débouchent respectivement, l'un à une extrémité de la première chambre (48) adjacente à la paroi transversale (40) du boîtier (42) et l'autre légèrement en avant de l'extrémité du piston émetteur (46) qui se trouve du côté de la seconde chambre (50).

7. Système selon l'une quelconque des revendications 1 à 6, **caractérisé en ce que** les première et seconde chambres (48, 50) ont une même section.

8. Système selon l'une quelconque des revendications 1 à 6, **caractérisé en ce que** les première et seconde chambres (48, 50) ont des sections différentes.

9. Système selon l'une des revendications 4 à 8, **caractérisé en ce que** le piston émetteur (46) comporte un premier joint (110) fixé à son extrémité située du côté de la première chambre (48), pour assurer l'étanchéité entre cette chambre et une partie (52) intermédiaire d'isolation du cylindre agencée entre les première et deuxième chambre (48, 50), un deuxième joint (112) fixé à son extrémité située du côté de la seconde chambre (50) pour assurer l'étanchéité entre la partie intermédiaire (52) d'isolation du cylindre et la seconde chambre (50), et un troisième joint (114) porté par l'axe (104) au contact du perçage (106) de la paroi (40) transversale du boîtier (42) du capteur (86), pour assurer l'étanchéité entre la première chambre (48) et la paroi transversale (40) du boîtier (42) du capteur (86).

10. Système selon la revendication précédente, **caractérisé en ce que** les premier, deuxième et troisième joints (110, 112, 114) sont réalisés en téflon.

11. Système selon l'une des revendications précédentes, **caractérisé en ce que** le dispositif (32) hydraulique de commande d'embrayage est constitué par un récepteur concentrique hydraulique.

12. Système selon la revendication précédente, **caractérisé en ce que** le dispositif (32) hydraulique de commande d'embrayage comporte un piston (78) annulaire qui est soumis à la pression régnant dans la seconde chambre (50), par l'intermédiaire d'une conduite (74).

13. Système selon l'une des revendications précédentes, **caractérisé en ce que** l'embrayage (10) est du type à diaphragme, le diaphragme (28) étant en forme de disque tronconique, son bord (25) de plus grand diamètre étant rigidement fixé sur un plateau (22) de pression, au voisinage de sa périphérie, et son bord (27) de plus petit diamètre étant en contact avec une bague (30) mobile fixée sur le piston (78) annulaire du dispositif (32) hydraulique de commande d'embrayage.
